# EUROPÄISCHE PATENTSCHRIFT

(11) **EP 1 063 958 B1**
(45) Veröffentlichungstag und Bekanntmachung des Hinweises auf die Patenterteilung: **26.05.2004**
(21) Anmeldenummer: 99902448.2
(22) Anmeldetag: 04.02.1999
(51) Int. Cl.: A61J 17/00

(54) **SCHNULLER-SAUGER**
NIPPLE PACIFIER
TETINE DE SUCETTE

(30) Priorität: 18.03.1998 AT 47798
(43) Veröffentlichungstag der Anmeldung: 03.01.2001
(73) Patentinhaber: Bamed AG, 8852 Altendorf (CH)
(72) Erfinder: RÖHRIG, Peter, A-1160 Wien (AT)
(74) Vertreter: Weinzinger, Arnulf, Dipl.-Ing.
(86) Internationale Anmeldenummer: PCT/AT1999/000029
(87) Internationale Veröffentlichungsnummer: WO 1999/047100

(56) Entgegenhaltungen:
- WO-A-98/27928
- FR-A- 698 047
- US-A- 2 612 165
- US-A- 5 127 903

## Beschreibung

Die Erfindung betrifft einen Schnuller-Sauger mit einem unterteilten, elastomeren Saugerkörper, der einen Befestigungsabschnitt, einen Halsabschnitt und einen Kopfabschnitt aufweist, und in dem ein Aufnahmeraum für Substanzen, z.B. ein Medikament zur oralen Verabreichung, vorgesehen ist.

Die orale Verabreichung von Medikamenten oder ähnlichen Substanzen an Kleinkinder ist oft schwierig, da sich die Kinder wegen des unangenehmen Geschmacks der Substanzen weigern, diese Substanzen einzunehmen. Überdies können wegen der Erstickungsgefahr in der Regel keine Tabletten an Kleinkinder verabreicht werden, und in manchen Fällen kann es notwendig sein, daß die Wirksubstanz eines Medikaments erst nach und nach abgegeben wird, wobei aber Kleinkinder nicht im Stande sind, Tabletten zu lutschen oder zu kauen.

Die FI-U 960 626, der die WO 98/27928 A entspricht, beschreibt einen Schnuller-Sauger der eingangs erwähnten Art, der an seiner Unterseite einen von einer Wand abgedeckten Aufnahmeraum für Substanzen aufweist. Dieser Aufnahmeraum ist als eine Art integrierter Beutel ausgebildet, der über eine von der Wand freigelassene Öffnung zugänglich ist, um die Substanz einzubringen bzw. an das Kind abzugeben.

In der DE 3 503 777 A wurde ein Arzneispendesauger vorgeschlagen, bei dem das Innere des gesamten Saugerkörpers einen Aufnahmeraum für ein Arzneimittel bildet; der Saugerkörper ist über ungefähr die Hälfte der Längserstreckung perforiert, und an der Rückseite steht er mit einem Nachfüllkanal in Verbindung, über den das jeweilige Arzneimittel in den Saugerkörper eingebracht werden kann. Dem Nachfüllkanal ist dabei eine lösbare Verschlußkappe zugeordnet. Im Prinzip ähnliche Sauger wurden weiters in der US 5 078 734 A sowie in der WO 91/04 727 A vorgeschlagen.

Ein Nachteil ist hier, daß je nach Kopfhaltung des den Schnuller, der mit dem Arzneispendesauger versehen ist, benützenden Kindes die Arznei auch im hinteren oder äußeren Bereich des Saugerkörpers, und somit außerhalb des Mundes verbleiben kann. In der WO 91/04 727 A wurde demgemäß auch bereits eine Ausführungsform vorgeschlagen, in der das Medikament zwischen zwei Lagen des Saugerkörpers im vorderen oder Kopfabschnitt desselben untergebracht ist. Es handelt sich jedoch hierbei um einen nur einmal verwendbaren Sauger, wogegen das Bestreben ist, einen Schnuller mit einem Spendesauger über einen längeren Zeitraum, auch zu einer öfteren Medikamentabgabe, verwenden zu können.

Der Nachteil der nicht vollständigen Verabreichung des jeweiligen Arzneimittels beim Saugen am Schnuller trifft auch auf den Schnuller gemäß der CH 684 160 A zu. Das Innere des Saugerkörpers dieses Schnullers ist dabei durch eine Trennwand unterteilt, wobei im Inneren des Halsabschnittes des Saugerkörpers, das vom Kopf- oder Gaumenabschnitt durch die Trennwand getrennt ist, das jeweilige Medikament aufgenommen wird. Zur Verabreichung des Medikaments sind in diesem Halsabschnitt zahlreiche kleine Perforationen angebracht.

Vor allem ist aber auch hier, wie bei den anderen bekannten Saugern mit Möglichkeit einer Arzneimittelverabreichung, von Nachteil, daß das jeweilige Arzneimittel bei einer mehrfachen Verwendung des Schnullers als Arzneimittelspender von der Rückseite oder Außenseite, über den Befestigungsabschnitt des Saugerkörpers im Bereich des Schnullerschildes, nachgefüllt wird, wodurch es notwendig ist, abnehmbare Verschlußteile wie Stopfen und dergleichen, anzubringen. Demgemäß werden lösbare Schnullerteile erhalten, und die Schnullerausbildungen sind insgesamt nicht zerlegungssicher, so daß eine beträchtliche Gefahr dafür besteht, daß das Kleinkind Teile des Schnullers nach einem ungewollten Zerlegen oder Lösen von Teilen verschluckt.

Auch die Reinigung der bekannten Saugerkörper in ihrem Inneren, nach Verabreichung eines Medikaments, ist nur mit größten Schwierigkeiten möglich, und die Herstellung des Saugerkörpers des Schnullers gemäß CH 684 160 A, mit dem geschlossenen Kopfoder Gaumenabschnitt, ist ebenfalls schwierig.

Wie bereits vorstehend angedeutet, ist es bereits seit einiger Zeit ein Anliegen, Schnuller oder Beruhigungssauger möglichst zerlegungssicher und kieferorthopädisch günstig zu gestalten. In diesem Zusammenhang kann beispielsweise auf die AT 338 440 B verwiesen werden.

Es ist somit Ziel der Erfindung, einen Sauger der eingangs angeführten Art vorzusehen, bei dem ein Einbringen des zu verabreichenden Medikaments nicht von der Rückseite der Außenseite des Schnullers, für den Befestigungsabschnitt des Saugerkörpers, erfolgen muß, so daß sich dieser Sauger zur Verwendung bei einem zerlegungssicheren Schnuller, etwa gemäß der genannten AT 338 440 B, eignet; weiters soll der Sauger einfach herzusteilen und auch leicht zu reinigen sein, und das Befüllen mit einem Medikament soll nichtsdestoweniger unproblematisch sein.

Der erfindungsgemäße Schnullersauger der eingangs erwähnten Art ist dadurch gekennzeichnet, daß der Aufnahmeraum im vom Halsabschnitt abgesonderten Kopfabschnitt vorgesehen ist, und daß der Kopfabschnitt mit einer am übrigen Saugerkörper anliegenden, davon abhebbaren Dichtlippe ausgebildet ist.

Beim erfindungsgemäßen Schnullersauger wird somit das jeweilige zu verabreichende Medikament oder allgemein die Substanz im vorderen Kopfabschnitt des Saugerkörpers untergebracht, womit sichergestellt ist, daß das Kind bei Benützung des Schnullers die Substanz nach und nach beim Saugen aufnimmt. Zum Befüllen des Aufnahmeraums im Kopfabschnitt kann dessen Dichtlippe vom übrigen Saugerkörper in entsprechendem Ausmaß abgehoben werden. Die Verabreichung der Substanz an das Kleinkind kann ebenfalls durch - hier geringfügigeres - Abheben der Dichtlippe erfolgen, wobei durch die Stärke des Saugens das Ausmaß des Abhebens gesteuert werden kann. Der vorliegende Sauger kann auch einfach und gut gereinigt werden, wenn die Dichtlippe vom übrigen Saugerkörper abgehoben oder umgestülpt wird.

Diese Saugerausbildung eignet sich, anders als die Schnullersauger gemäß Stand der Technik, auch in vorteilhafter Weise zum Sammeln des Speichels des Kleinkindes, z.B. für medizinische Untersuchungen, da Speichel beim Saugen durch das Abheben der Dichtlippe am durch den übrigen Saugerkörper gebildeten "Ventilsitz" vorbei in das Innere des Kopfabschnittes, d.h. in dessen Aufnahmeraum, in ausreichenden Mengen gelangen kann. Dabei ist es auch vorteilhaft, einen Schaumstoffkörper im Aufnahmeraum anzubringen, der den Speichel in der Art eines Schwammes aufnimmt. Dieser Schaumstoffkörper kann beispielsweise die Form eines geschlitzten Ringes aufweisen.

Als besonders vorteilhaft erwiesen hat sich eine Ausführung, bei der der Kopfabschnitt eine mit dem übrigen Saugerkörper verbundene, zumindest auf einem Teil des Umfangs über eine Trennlinie an den übrigen Saugerkörper anschließende und auswärts umstülpbare Haube aufweist. Der Sauger kann dabei in einem Zustand hergestellt werden, in dem die Haube auswärts umgestülpt ist, so daß keine einander überlappenden Teile in diesem Zustand vorliegen, was die Herstellung in einem Stück vereinfacht. Die bevorzugte einstückige Ausbildung des Saugerkörpers hat dabei nicht nur den Vorteil einer einfachen Herstellung, sondern überdies auch jenen einer höheren Festigkeit gegenüber einem ungewollten Trennen, wie es etwa im Falle einer Herstellung des Saugerkörpers in Teilen und deren nachträglicher Verbindung, etwa durch Kleben, erfolgen kann.

Es ist demgemäß besonders zu bevorzugen, wenn die Haube einstückig mit dem übrigen Saugerkörper verbunden ist.

Wenngleich es möglich wäre, die Haube in einem Stück mit dem übrigen Saugerkörper über einen mehr oder weniger streifenförmigen äußeren Steg, der einen Teil des Saugerkörper-Mantels bildet, zu verbinden, so ist es doch im Hinblick auf die dabei erzielbare höhere Festigkeit sowie die letztlich auch einfachere Formgestaltung und Herstellung besonders günstig, wenn die Haube über einen axialen, mittigen Schaftteil mit einer den Halsabschnitt abschließenden Stirnwand verbunden ist. Bei dieser Ausbildung kann die Haube somit mit ihrem gesamten in der Normalstellung dem übrigen Saugerkörper zugewandten freien Rand in Richtung weg vom Befestigungs- und Halsabschnitt des Saugerkörpers umgestülpt werden, so daß dann eine umgestülpte "Schale" vorliegt, die über einen mittigen "Stiel", den Schaftteil, mit dem übrigen Saugerkörper in einem Stück verbunden ist. Dabei ist es weiters von Vorteil, wenn der Schaftteil mindestens eine Öffnung zum klemmenden Festhalten von Medikamenten in Tablettenoder Kapselform aufweist.

Der übrige Saugerkörper hat zweckmäßiger Weise am Umfang der Trennwand eine absatzförmige oder schulterförmige Anlagefläche als "Ventilsitz", wo in der Normalstellung der freie Rand der Haube anliegt. In diesem Anlage- oder Dichtungsbereich kann jedoch, um die Abgabe des im Aufnahmeraum, d.h. im Inneren der Haube, aufgenommenen Medikaments zu erleichtern, ein Durchlaß mit entsprechend kleinem Querschnitt vorgesehen sein, um nicht ein ungewolltes, übermäßiges Auslaufen des Arzneimittels vor Benützung des mit dem Sauger versehenen Schnullers zu verursachen. Demgemäß ist eine vorteilhafte Ausführungsform dadurch gekennzeichnet, daß am dem übrigen Saugerkörper benachbarten Rand der Haube zumindest ein kanalförmiger Durchlaß ausgebildet ist und die Haube ansonsten mit ihrem Rand als Dichtlippe am übrigen Saugerkörper anliegt.

Im übrigen kann aber selbstverständlich auch zur Abgabe des Arzneimittels in an sich bekannter Weise in der Haube zumindest eine Durchflußöffnung vorgesehen sein.

Der Saugerkörper kann wie an sich bekannt aus den verschiedensten Gummimaterialien bestehen, vorzugsweise besteht er aus Silikonkautschuk.

Die Erfindung hat auch ein vorteilhaftes Verfahren zur Herstellung eines Saugers gemäß Erfindung zum Gegenstand, wobei der Saugerkörper aus einer spritzgußfähigen Masse, insbesondere Silikonkautschuk, geformt wird, und dieses Verfahren zeichnet sich erfindungsgemäß dadurch aus, daß der Saugerkörper im Zustand mit auswärts gestülpter Haube geformt wird, und daß die Haube nach Entformen des Saugerkörpers in ihre Normallage zurückgestülpt wird. Auf diese Weise wird, wie bereits vorstehend angedeutet, trotz der relativ komplizierten Form des Saugerkörpers im Normalzustand, mit den übereinanderliegenden Bereichen, eine problemlose, einfache Herstellung in einem Schritt ermöglicht. Dabei kann auch vorgesehen werden, daß während des Formens des Saugerkörpers mit der auswärts gestülpten Haube gleichzeitig mit Hilfe zumindest eines Dorn-Einsatzes zumindest eine Durchflußöffnung geformt wird. Ferner ist es günstig, wenn während des Formens des Saugerkörpers gleichzeitig im Schaftteil mit Hilfe zumindest eines Dorn-Einsatzes zumindest eine Öffnung geformt wird.

Schließlich betrifft die Erfindung auch eine Vorrichtung zur Herstellung des vorliegenden Saugers gemäß dem erfindungsgemäßen Verfahren, mit einer dem Saugerkörper entsprechenden Form, wobei erfindungsgemäß der Form ein Kern zur Ausbildung der auswärts gestülpten Haube zugeordnet ist. Überdies ist es hier von Vorteil, wenn ein weiterer, dem Kern zur Ausbildung der umgestülpten Haube gegenüberliegender Kern für die Ausbildung der hohlen Befestigungs- und Halsabschnitte des Saugerkörpers vorgesehen ist. Dieser weitere Kern kann jedoch dann entfallen, wenn eine volle Ausbildung des Befestigungs- und Halsabschnitts-Saugerkörpers erwünscht sein sollte.

Um in einem Vorgang zugleich die Haube für den Durchlaß des Medikaments zu perforieren, ist es schließlich günstig, wenn die Form Ausnehmungen für Einsätze zur Formung der Durchflußöffnung(en) in der Haube und/oder der Öffnung(en) im Schaftteil aufweist.

Die Erfindung wird nachstehend anhand von in der Zeichnung veranschaulichten, bevorzugten Ausführungsbeispielen, auf die sie jedoch nicht beschränkt sein soll, noch weiter erläutert. Es zeigen:
Fig.1 einen Axialschnitt durch einen Saugerkörper gemäß der Linie I-I in Fig.2;
Fig.2 einen entsprechenden Axialschnitt durch diesen Saugerkörper gemäß der Linie II-II in Fig.1;
die Figuren 3 und 4 entsprechende Schnittdarstellungen dieses Saugerkörpers, wobei in diesen Figuren 3 und 4 jedoch die den Kopfabschnitt des Saugerkörpers definierende Haube auswärts umgestülpt ist;
Fig.5 schematisch eine zweiteilige Form mit zwei zugeordneten Kernen zur Herstellung eines solchen Saugerkörpers in der Konfiguration mit auswärts gestülpter Haube gemäß Fig.3 und 4; und
die Fig.6 bis 9 in den Darstellungen gemäß Fig.1 bis 4 entsprechenden Längsschnitt-Darstellungen einen modifizierten Saugerkörper im Gebrauchszustand (Fig.6, 7) bzw. im Zustand beim Entformen (Fig.8,9).

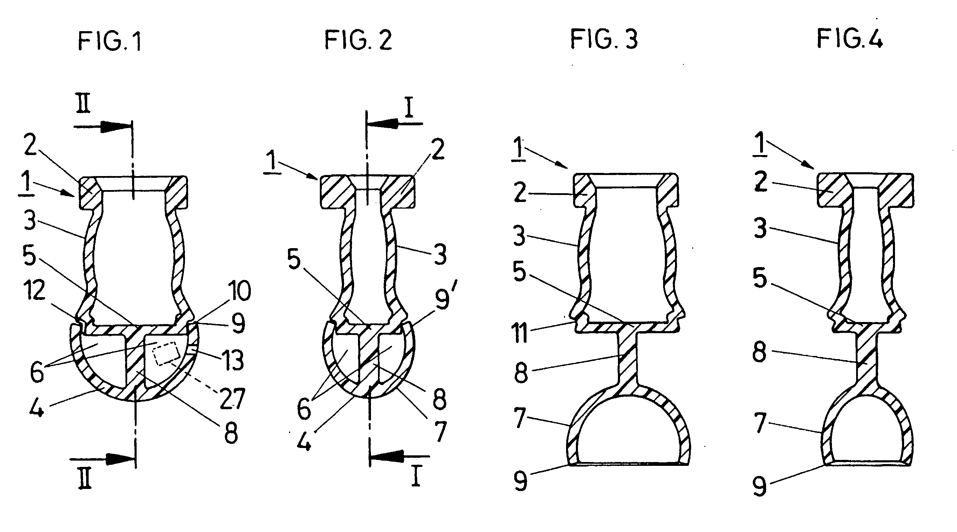

In den Figuren 1 bis 4 ist ein insgesamt mit 1 bezeichneter, derzeit besonders bevorzugter Schnuller-Saugerkörper gezeigt, der zur zerlegungssicheren Anbringung in einem Schnuller etwa gemäß AT 338 440 B oder aber auch AT 379 508 B geeignet ist. Da derartige zerlegungssichere Schnuller insgesamt hinlänglich bekannt sind, kann sich hier eine Beschreibung derselben erübrigen, und es genügt, den Saugerkörper 1 zu erläutern.

Der vorliegende Saugerkörper 1 hat einen wulstartigen hinteren Befestigungsabschnitt 2, mit dem er im montierten Zustand in an sich bekannter Weise an der Rückseite eines hier nicht dargestellten Schnullerschildes gehalten wird, weiters einen Halsabschnitt 3 sowie einen Kopfabschnitt (ein Gaumenstück) 4 mit gegenüber dem Halsabschnitt 3 größeren Querschnittsabmessungen.

Der Halsabschnitt 3 ist an seiner vorderen Stirnseite durch eine Stirnwand 5 abgeschlossen, die zugleich einen Aufnahmeraum 6 im Inneren des Kopfabschnittes 4 nach hinten begrenzt. Nach vorne hin wird der Kopfabschnitt 4 durch eine Haube 7 gebildet, die über einen mittigen Schaftteil 8 mit der Stirnwand 5 und damit mit dem übrigen Saugerkörper 2,3 verbunden ist. Diese Haube 7 liegt im Bereich eines Randes 9 bzw. einer Trennlinie 10 am übrigen Saugerkörper 2,3 mehr oder weniger gut dichtend an, wobei durch die Wölbung der Haube 7 auch eine Vorspannung und somit ein gewisser Anlage- oder Abdichtungsdruck vorgesehen sein kann. Rund um die Stirnwand 5 des Halsabschnittes 3 ist ein Ventilsitz-artiger Absatz- oder Schulterbereich 11 geformt, in dem gegebenenfalls, wie aus Fig.1 ersichtlich ist, lokal wenigstens ein kleiner Durchlaßkanal 12 geformt sein kann. Selbstverständlich könnte ein derartiger kanalförmiger Durchlaß 12 auch dadurch gebildet sein, daß lokal eine Vertiefung mit entsprechend kleinem Querschnitt am Rand 9 der Haube 7 eingeformt wird.

Stattdessen oder zusätzlich kann in der Haube 7 zumindest eine Durchflußöffnung in der Art einer Perforation angebracht sein, wie in Fig.1 bei 13 angedeutet ist.

Es ist jedoch auch denkbar, derartige Durchflußöffnungen 13 oder kanalförmige Durchlässe 12 wegzulassen, da ein Austritt von im Aufnahmeraum 6 enthaltener Substanz, z.B. einem flüssigen oder pulverförmigen Medikament, auch dadurch erhalten wird, daß sich der Rand 9 der Haube 7, der über den gesamten Umfang eine Dichtlippe 9' bildet, etwas von seinem Ventilsitz, d.h. vom Schulterbereich 11, abhebt.

Daß ein derartiges Abheben bis zu einem Umstülpen der Haube 7 entgegen dem elastischen Widerstand des Materials der Haube 7 möglich ist, ergibt sich aus der Darstellung in den Fig.3 und 4, in denen der Saugerkörper 1 in einer Konfiguration dargestellt ist, in der die Haube 7 "auswärts", d.h. vom übrigen Saugerkörper weg, umgestülpt wurde. Die Haube 7 kann dabei eine etwas modifizierte Form im Vergleich zur Normalkonfiguration gemäß Fig.1 und 2 aufweisen, nämlich mit einem engeren Rand 9, so daß im Normalzustand gemäß Fig.1 und 2 die Haube 7 wie erwähnt mit Vorspannung am "Ventilsitz" 11 anliegt. Dadurch sowie durch die Wölbung der Haube 7 wird auch eine gewisse Formstabilität des Kopfabschnittes 4 des Saugers 1 sichergestellt.

In der Konfiguration gemäß Fig.3 und 4 mit umgestülpter Haube 7 ist, wie unmittelbar zu sehen ist, eine problemlose Herstellung des Saugerkörpers 1 in einer Form möglich, da dann, anders als in der Normalkonfiguration gemäß Fig.1 und 2, keine einander überlappenden Teile mehr gegeben sind.

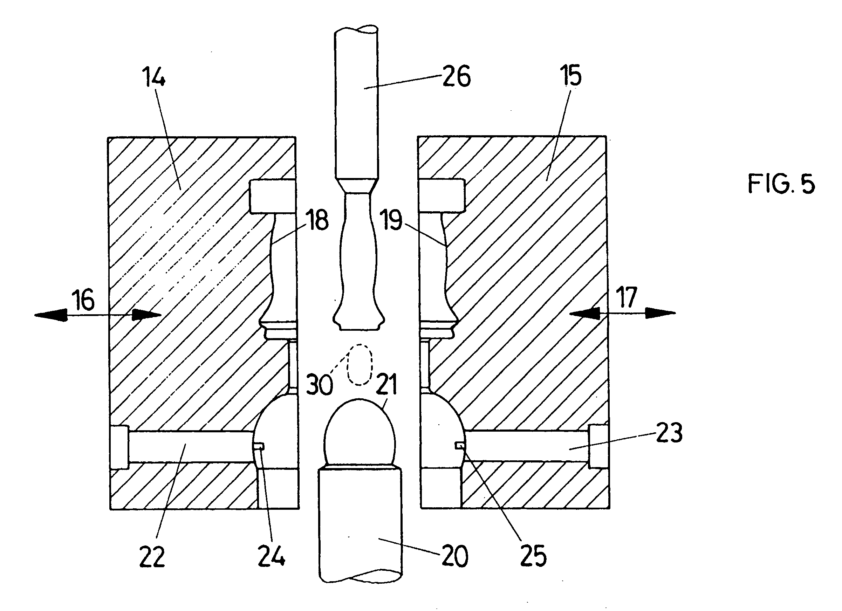

In Fig.5 ist eine entsprechende, z.B. zweiteilige Form, mit Formbacken 14,15 gezeigt, wobei die Formbacken 14,15 entsprechend den Doppelpfeilen 16,17 geschlossen bzw. geöffnet werden können. Die Formbacken 14,15 definieren einen Formhohlraum 18,19, in den im geschlossenen Zustand der Form ein vorderer Kern 20 mit einem Kopf 21 entsprechend dem Inneren der Haube 7 (Fig.3,4) hineinragt. Im Bereich dieses Kopfes 21 bzw. der zu formenden umgestülpten Haube 7 sind in den Formbacken 14,15 beispielsweise stiftartige Einsätze 22,23 mit vorderen Dornen 24,25 zur Bildung der Durchflußöffnungen 13, (s.Fig.1), in entsprechenden Bohrungen oder dergleichen Ausnehmungen eingesetzt. Ein weiterer Kern 26 dient dazu, den hohlen Halsabschnitt 3 und Befestigungsabschnitt 2 innenseitig zu formen.

Der beschriebene Saugerkörper 1 wird so bevorzugt in einem Stück aus einem Elastomer, insbesondere aus Silikonkautschuk oder einem thermoplastischen Elastomer hergestellt, wobei nach der eigentlichen Formung die Haube 7 in die Normalkonfiguration gemäß Fig.1 und 2 zurückgestülpt wird.

Nach Montage des Schnullers insgesamt kann im Aufnahmeraum 6 innerhalb der Haube 7 bei Bedarf eine Substanz, wie ein Arzneimittel, eingefüllt werden, indem die Haube 7 mit ihrem Rand 9 zumindest teilweise vom übrigen Saugerkörper 2,3 abgehoben wird. Die Substanz kann z.B. flüssig oder pulverförmig sein, sie kann aber auch in Form einer Tablette oder Kapsel (z.B. mit verzögerter Wirkstoff-Abgabe) vorliegen, wie in Fig.1 schematisch bei 27 veranschaulicht ist.

Andererseits kann auch der beschriebene Sauger 1 dazu verwendet werden, im Aufnahmeraum 6 innerhalb der Haube 7 Speichel des den Schnuller benutzenden Kindes, für verschiedenste Untersuchungen, zu sammeln. Dabei ist es auch denkbar, zum Aufsaugen des Speichels einen Schaumgummi-Körper im Aufnahmeraum 6 im Inneren des Kopfabschnittes 4 anzubringen.

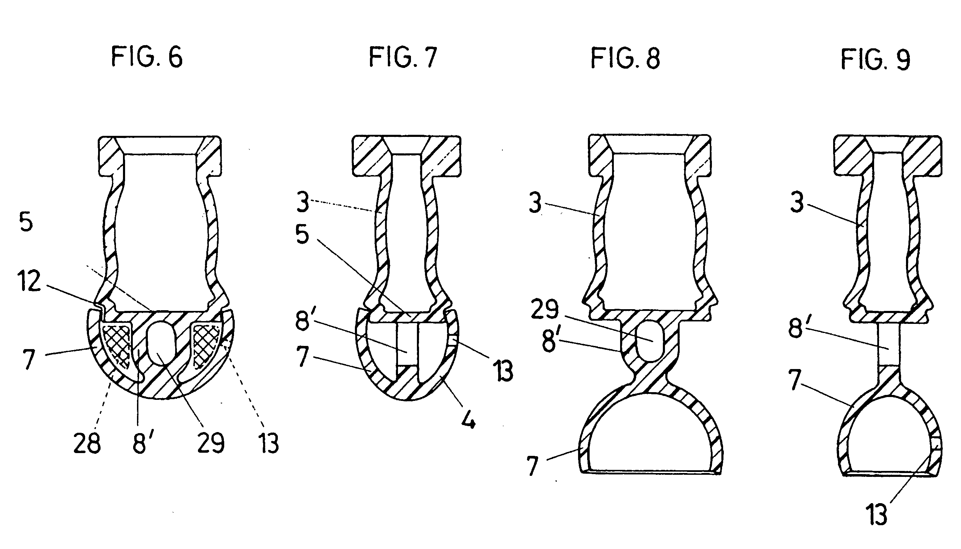

Ein derartiger Schaumgummi-Körper 28 in Form eines geschlitzten Ringes, der um den Schaftteil herum eingelegt wird, ist schematisch mit strichlierten Linien in Fig.6 gezeigt. Die Fig.6 zeigt zusammen mit den Fig.7 bis 9 eine modifizierte Ausführungsform des Saugers 1, verglichen mit dem Sauger gemäß Fig.1 bis 4, wobei diese Modifikation darin besteht, daß ein Schaftteil 8' mit einer Öffnung 29 vorgesehen ist. Diese Öffnung 29, die zu einer Verbreiterung des Schaftteils 8' führt, so daß der Schaftteil 8' relativ flach bis wandförmig wird, dient zum klemmenden Festhalten von festen Arzneimitteln, nämlich Tabletten oder Kapseln.

Im übrigen entspricht der Sauger 1 gemäß Fig.6 bis 9 jener gemäß Fig.1 bis 4, vor allem was den Halsabschnitt 3 und den Kopfabschitt 4 mit der Haube 7 sowie dem kanalförmigen Durchlaß 12 und der Durchlaßöffnung 13 betrifft, so daß sich eine neuerliche Beschreibung hiervon erübrigen kann. Insbesondere erfolgt auch die Herstellung dieses modifizierten Saugerkörpers auf die gleiche Weise, wie vorstehend an Hand der Fig.1 bis 4 und insbesondere Fig.5 erläutert, nämlich mit auswärts gestülpter Haube 7, vgl. die Fig.8 und 9. Zur Anbringung der Öffnung 29 im Schaftteil 8' kann ein den Dorneinsätzen 22, 23 gemäß Fig.5 (die dort für die Herstellung der Durchlaßöffnungen 13 dienen) vergleichbarer Dorneinsatz vorgesehen sein, wie in Fig.5 schematisch mit strichlierter Linie bei 30 angedeutet ist. (Es sei darauf hingewiesen, daß davon abgesehen wurde, in Fig.5 die modifizierte Form des Schaftteiles in der Form selbst einzuzeichnen.)

Wie sich aus den Schnittdarstellungen gemäß Fig.1 bis 4 und 6 bis 9 ergibt, hat der gezeigte Saugerkörper 1 einen nichtkreisförmigen Querschnitt, d.h. einen ovalen Querschnitt mit einer aus Fig.1 (bzw. Fig.6) ersichtlichen größeren Querachse und einer aus Fig.2 (bzw. Fig.7) erkennbaren kleineren Querachse. Eine derartige im Querschnitt elliptische Saugerform wird heute zumeist bevorzugt, es ist jedoch selbstverständlich, daß die erfindungsgemäße Ausbildung auch bei anderen Saugern, z.B. mit kreisförmiger Querschnittskonfiguration,' angewendet werden kann.

Die Materialstärke im Bereich der Haube 7, des Halsabschnittes 3 und der Stirnwand 5 kann beispielsweise in der Größenordnung von 1 mm liegen, und der Schaftteil 8 kann beispielsweise zylindrisch, mit einem Durchmesser von ca. 2 mm, vorgesehen sein.

## Patentansprüche

1. Schnuller-Sauger mit einem unterteilten, elastomeren Saugerkörper (1), der einen Befestigungsabschnitt (2), einen Halsabschnitt (3) und einen Kopfabschnitt (4) mit einem von einer Wand abgedeckten Aufnahmeraum (6) für Substanzen aufweist, **dadurch gekennzeichnet, dass** die Wand durch eine auswärts umstülpbare Haube (7) gebildet ist, die mit dem Halsabschnitt (3) verbunden ist und den Kopfabschnitt (4) bildet, und deren Rand eine an der Stirnseite des Halsabschnitts (3) randseitig anliegende, davon abhebbare Dichtlippe (9') bildet.

2. Sauger nach Anspruch 1, **dadurch gekennzeichnet, dass** die Haube (7) einstückig mit dem übrigen Saugerkörper (2,3) verbunden ist.

3. Sauger nach Anspruch 1 oder 2, **dadurch gekennzeichnet, dass** die Haube (7) über einen axialen, mittigen Schaftteil (8) mit einer den Halsabschnitt (3) abschließenden Stirnwand (5) verbunden ist.

4. Sauger nach Anspruch 3, **dadurch gekennzeichnet, dass** der Schaftteil (8') mindestens eine Öffnung (29) zum klemmenden Festhalten von Medikamenten in Tabletten- oder Kapselform aufweist.

5. Sauger nach einem der Ansprüche 1 bis 4, **dadurch gekennzeichnet, dass** am dem übrigen Saugerkörper (2,3) benachbarten Rand (9) der Haube (7) zumindest ein kanalförmiger Durchlaß (12) ausgebildet ist und die Haube (7) ansonsten mit ihrem Rand (9) als Dichtlippe (9') am übrigen Saugerkörper (2,3) anliegt.

6. Sauger nach einem der Ansprüche 1 bis 5, **dadurch gekennzeichnet, dass** in der Haube (7) zumindest eine Durchflußöffnung (13) vorgesehen ist.

7. Sauger nach einem der Ansprüche 1 bis 6, **dadurch gekennzeichnet, dass** der einstückige Saugerkörper (1) aus Silikonkautschuk besteht.

8. Sauger nach Anspruch 1, **dadurch gekennzeichnet, dass** im Aufnahmeraum (6) ein Schaumgummi-Körper (28) angebracht ist.

9. Verfahren zur Herstellung eines Saugers nach einem der Ansprüche 1 bis 8, wobei der Saugerkörper (1) aus einer gießfähigen Masse, insbesondere Silikonkautschuk, geformt wird, **dadurch gekennzeichnet, dass** der Saugerkörper, (1) im Zustand mit auswärts gestülpter Haube (7) geformt wird, und dass die Haube (7) nach Entformen des Saugerkörpers (1) in ihre Normallage zurückgestülpt wird.

10. Verfahren nach Anspruch 9, **dadurch gekennzeichnet, dass** während des Formens des Saugerkörpers (1) in der auswärts gestülpten Haube gleichzeitig mit Hilfe zumindest eines Dorn Einsatzes zumindest eine Durchflußöffnung geformt wird.

11. Verfahren nach Anspruch 9 oder 10, **dadurch gekennzeichnet, dass** während des Formens des Saugerkörpers gleichzeitig im Schaftteil mit Hilfe zumindest eines Dorn-Einsatzes zumindest eine Öffnung (29) geformt wird.

12. Vorrichtung zur Herstellung des Saugers nach einem der Ansprüche 1 bis 8 gemäß dem Verfahren nach einem der Ansprüche 9 bis 11, mit einer dem Saugerkörper (1) entsprechenden Form (14, 15), **dadurch gekennzeichnet, daß** der Form (14, 15) ein Kern (20) zur Ausbildung der auswärts gestülpten Haube (7) zugeordnet ist.

13. Vorrichtung nach Anspruch 12, **dadurch gekennzeichnet, dass** ein weiterer, dem Kern (20) zur Ausbildung der umgestülpten Haube (7) gegenüberliegender Kern (26) für die Ausbildung der hohlen Befestigungs- (2) und Halsabschnitte (3) des Saugerkörper (1) vorgesehen ist.

14. Vorrichtung nach Anspruch 12 oder 13, **dadurch gekennzeichnet, dass** die Form Ausnehmungen für Einsätze (22, 23, 30) zur Formung der Durchflußöffnung(en) (13) in der Haube (7) und/oder der Öffnung(en) (29) im Schaftteil (8') aufweist.

## Claims

1. A pacifier nipple with a subdivided, elastomeric nipple body (1) comprising a fastening portion (2), a neck portion (3) and a head portion (4) and in which a substances-receiving space (6) covered by a wall is provided, **characterised in that** the wall is formed by an outwardly reversible hood (7) which is connected to the neck portion (3) and forms the head portion (4), and which has a rim forming a sealing lip (9') abutting on the front-end side of the neck portion (3) at the rim side thereof and liftable therefrom.

2. A nipple according to claim 1, **characterised in that** the hood (7) is integrally connected with the remaining nipple body (2, 3).

3. A nipple according to claim 1 or 2, **characterised in that** via an axial, central shaft part (8), the hood (7) is connected with a front-end wall (5) that closes the neck portion (3).

4. A nipple according to claim 3, **characterised in that** the shaft part (8') has at least one opening (29) for clamping retention of medicaments in the form of tablets or capsules.

5. A nipple according to any one of claims 1 to 4, **characterised in that** at least one channel-shaped passage (12) is provided on the rim (9) of the hood (7) adjacent the remaining nipple body (2, 3) and the hood (7) otherwise rests on the remaining nipple body (2, 3) with its rim (9) acting as a sealing lip (9').

6. A nipple according to any one of claims 1 to 5, **characterised in that** at least one passage opening (13) is provided in the hood (7).

7. A nipple according to any one of claims 1 to 6, **characterised in that** the integral nipple body (1) is made of silicone caoutchouc.

8. A nipple according to claim 1, **characterised in that** a foam rubber body (28) is located in the receiving space (6).

9. A method of producing a nipple according to any one of claims 1 to 8, wherein the nipple body (1) is moulded of a mouldable mass, in particular silicone caoutchouc, **characterised in that** the nipple body (1) is moulded in its state with outwardly reversed hood (7) and that the hood (7) is turned back into its normal position after the nipple body (1) has been removed from the mould.

10. A method according to claim 9, **characterised in that** during the moulding of the nipple body (1), at least one passage opening simultaneously is formed in the outwardly reversed hood by aid of at least one spike insert.

11. A method according to claim 9 or 10, **characterised in that** during the moulding of the nipple body, at least one opening (29) is simultaneously formed in the shaft part by aid of at least one spike insert.

12. A device for producing the nipple according to any one of claims 1 to 8 according to the method of any one of claims 9 to 11, with a mould (14, 15) corresponding to the nipple body (1), **characterised in that** the mould (14, 15) has an associated core (20) for forming the outwardly reversed hood (7).

13. A device according to claim 12, **characterised in that** a further core (26) located opposite the core (20) for the formation of the reversed hood (7) is provided for forming the hollow fastening (2) and neck portions (3) of the nipple body (1).

14. A device according to claim 12 or 13, **characterised in that** the mould has recesses for inserts (22, 23, 30) for the forming of the passage opening(s) (13) in the hood (7) and/or the opening(s) (29) in the shaft part (8').

## Revendications

1. Sucette de tétine avec un corps de sucette (1) subdivisé en élastomère, comportant un tronçon de fixation (2), un tronçon de col (3), et un tronçon de tête (4) avec un espace de réception (6) destiné à des substances recouvert par une paroi, **caractérisée en ce que** la paroi est formée par une calotte (7) pouvant être retournée vers l'extérieur, qui est reliée au tronçon de col (3) et forme le tronçon de tête (4), et dont le bord forme une lèvre d'étanchéité (9') qui s'applique contre le bord de la face frontale du tronçon de col (3), et qui peut en être retirée.

2. Sucette selon la revendication 1, **caractérisée en ce que** la calotte (7) est reliée d'une seul tenant au reste du corps de sucette (2, 3).

3. Sucette selon la revendication 1 ou 2, **caractérisée en ce que** la calotte (7) est reliée à une paroi frontale (5) fermant le tronçon de col (3) par l'intermédiaire d'un élément d'extension (8) central axial.

4. Sucette selon la revendication 3, **caractérisée en ce que** l'élément d'extension (8') comporte au moins un orifice (29) destiné à retenir par serrage des médicaments sous forme de comprimés ou de capsules.

5. Sucette selon l'une des revendications 1 à 4, caractérisée en ce qu'au moins un passage (12) en forme de canal est agencé sur le bord (9) de la calotte (7) adjacent au reste du corps de sucette (2, 3), et en ce que par ailleurs, la calotte (7) s'applique par son bord (9) en tant que lèvre d'étanchéité (9') contre le reste du corps de sucette (2, 3).

6. Sucette selon l'une des revendications 1 à 5, caractérisée en ce qu'au moins un orifice de passage (13) est prévu dans la calotte (7).

7. Sucette selon l'une des revendications 1 à 6, caractérisée en ce que le corps de sucette (1) d'un seul tenant est constitué de caoutchouc silicone.

8. Sucette selon la revendication 1, **caractérisée en ce qu'**un corps (28) en caoutchouc mousse est prévu dans l'espace de réception (6).

9. Procédé destiné à la fabrication d'une sucette selon l'une des revendications 1 à 8, le corps de sucette (1) étant moulé à partir d'une masse susceptible d'être coulée, notamment de caoutchouc silicone, **caractérisé en ce que** le corps de sucette (1) est moulé à l'état retourné vers l'extérieur de la calotte (7), et **en ce que** la calotte (7) est retournée dans sa position normale après le démoulage du corps de sucette (1).

10. Procédé selon la revendication 9, **caractérisé en ce que**, pendant le moulage du corps de sucette (1), au moins un orifice de passage est formé simultanément dans la calotte retournée vers l'extérieur à l'aide d'au moins un insert de broche.

11. Procédé selon la revendication 9 ou 10, **caractérisé en ce que**, pendant le moulage du corps de sucette, au moins un orifice (29) est formé simultanément dans l'élément d'extension à l'aide d'au moins un insert de broche.

12. Dispositif destiné à la fabrication d'une sucette selon l'une des revendications 1 à 8 d'après le procédé selon l'une des revendications 9 à 11, comportant un moule (14, 15) correspondant au corps de sucette (1), **caractérisé en ce qu'**un noyau (20) est associé au moule (14, 15) pour la formation de la calotte (7) retournée vers l'extérieur.

13. Dispositif selon la revendication 12, **caractérisé en ce que**, pour la formation du tronçon de fixation (2) et du tronçon de col (3) creux du corps de sucette (1), il est prévu un autre noyau (26) qui est situé en face du noyau (20) destiné à la formation de la calotte (7) retournée vers l'extérieur.

14. Dispositif selon la revendication 12 ou 13, **caractérisé en ce que** le moule comporte des évidements pour des inserts (22, 23, 30) destinés à la formation de l'orifice (des orifices) de passage (13) dans la calotte (7) et/ou de l'orifice (des orifices) (29) dans l'élément d'extension (8').
